## Europäisches Patentamt
## European Patent Office
## Office européen des brevets

(19)

(11) Numéro de publication: **0 185 568**
**B1**

# FASCICULE DE BREVET EUROPEEN

(12)

(45) Date de publication du fascicule du brevet:
**01.02.89**

(51) Int. Cl.⁴: **B25J 15/04**

(21) Numéro de dépôt: **85402220.9**

(22) Date de dépôt: **15.11.85**

(54) Raccord à baionnette de télémanipulateur comportant une sécurité contre un déverrouillage accidentel.

(30) Priorité: **21.11.84 FR 8417740**

(43) Date de publication de la demande:
**25.06.86 Bulletin 86/26**

(45) Mention de la délivrance du brevet:
**01.02.89 Bulletin 89/5**

(84) Etats contractants désignés:
**BE DE GB IT SE**

(56) Documents cités:
**EP-A- 0 015 185**
**DE-B- 1 229 788**
**FR-A- 2 447 785**
**GB-A- 655 205**
**GB-A- 679 534**

(73) Titulaire: **SOCIETE D'INNOVATIONS TECHNIQUES, Zone Industrielle Nord Voie 13, F-86100 Chatellerault(FR)**

(72) Inventeur: **Garnier, André, Nueil Sous Faye, F-86200 Loudun(FR)**

(74) Mandataire: **Mongrédien, André et al, c/o BREVATOME 25, rue de Ponthieu, F-75008 Paris(FR)**

ACTORUM AG

## Description

Les manipulateurs sont des appareils qui permettent la manipulation à distance de produits dangereux, notamment radioactifs, contenus dans une enceinte étanche. Ils comprennent un bras articulé traversant une paroi de l'enceinte, dont une extrémité disposée à l'extérieur de l'enceinte est munie d'un dispositif de commande et dont l'autre extrémité porte une pince interchangeable par l'intermédiaire d'un raccord.

L'invention se rapporte à un raccord étanche pour télémanipulateur destiné notamment à la manipulation à distance de produits radioactifs ou dangereux, comprenant un premier élément appelé ci-après "raccord de pince" et comportant la pince, un second élément appelé ci-après "raccord étanche" et un troisième élément appelé ci-après "raccord du télémanipulateur", le raccord étanche étant emboîté coaxialement dans le raccord de pince et le raccord du télémanipulateur étant emboîté coaxialement dans le raccord étanche, et d'autre part, relié à un bras porteur articulé, la jonction entre les corps des trois éléments proprement dits et entre les trois parties de l'axe mobile étant réalisée par un système de verrouillage à baïonnette qui permet d'effectuer la connexion ou la déconnexion à distance du raccord de pince et du raccord du télémanipulateur au raccord étanche, le système de verrouillage à baïonnette entre les corps des trois éléments permettant ce verrouillage par poussée axiale de l'élément à verrouiller (le raccord étanche ou le raccord du télémanipulateur) contre l'élément de réception (le raccord de pince ou le raccord étanche), puis par rotation de l'élément à verrouiller autour de son axe, des pieds ménagés radialement sur les corps des éléments à verrouiller venant alors s'engager dans des baïonnettes de l'élément de réception et étant automatiquement verrouillés dans celles-ci au moyen d'une pièce faisant partie de l'élément de réception.

Avec un tel dispositif, il peut arriver, au cours d'une manipulation dans un endroit peu accessible, que la bague coulissante qui commande le verrouillage et le déverrouillage des pieds du raccord de télémanipulateur dans la baïonnette du raccord étanche se coïnce, étant donné que son diamètre extérieur est plus important que celui des autres parties du raccord. En outre, cette bague coulissante supporte un "booting", c'est-à-dire un soufflet d'étanchéité raccordé à la paroi de l'enceinte. Ce soufflet peut également être coïncé, ce qui immobilise la bague coulissante dont il est solidaire. Si, à ce moment, un effort de traction est exercé sur le bras du manipulateur pour essayer de dégager la pince, il se produira un mouvement de déplacement relatif de la bague coulissante du raccord étanche par rapport au corps de ce raccord dans le sens qui dégage les moyens de verrouillage à baïonnette. Ces moyens de verrouillage étant dégagés, il suffit d'une rotation du raccord de télémanipulateur pour faire sortir les pieds de la baïonnette du raccord de pince et provoquer le désaccouplement du raccord de pince et du raccord étanche. C'est ainsi que l'on a observé à de nombreuses reprises un désaccouplement accidentel du verrouillage à baïonnette dans un raccord du type décrit ci-dessus.

L'invention a pour objet un raccord à baïonnette, notamment pour télémanipulateur, qui remédie à cet inconvénient. Il évite que le raccord de pince puisse se désaccoupler accidentellement du raccord étanche lorsque la bague coulissante du raccord étanche est coïncée accidentellement. Ce but est atteint, conformément à l'invention, grâce à la présence d'un élément d'arrêt ou de butée, qui interdit à une bague de verrouillage du raccord étanche de coulisser jusqu'à la position de déverrouillage du verrouillage du raccord étanche sur le raccord de pince lorsque ce raccord de pince est monté sur le raccord étanche.

Grâce à la présence de cet élément d'arrêt ou de butée, la bague coulissante du raccord étanche vient en butée lorsqu'elle est sollicitée à être déplacée axialement vers la pince dans les circonstances mentionnées ci-dessus et par conséquent elle ne peut pas pousser la bague coulissante de verrouillage du raccord de pince. Une traction exercée sur le bras du manipulateur ne conduit donc pas à un déplacement vers l'avant, c'est-à-dire vers les doigts de la pince, de la bague ou élément de verrouillage du raccord de pince. Tout déverrouillage accidentel est ainsi rendu impossible.

De préférence, l'élément d'arrêt ou de butée est constitué par un élément formant entretoise disposé entre le corps du raccord de pince et la bague coulissante de verrouillage de ce raccord, la longueur de l'élément formant entretoise étant telle que la bague coulissante de raccord de pince ne peut être déplacée axialement dans la direction des doigts de la pince.

De préférence encore, lesdits premier, second et troisième éléments sont traversés de bout en bout par un axe mobile en translation pour commander l'ouverture et la fermeture de la pince, cet axe étant composé des trois parties, chaque partie de l'axe mobile étant reliée avec l'un des trois éléments proprement dits, l'ouverture du raccord étanche étant fermée par une membrane d'étanchéité qui est reliée avec la partie de l'axe mobile du raccord étanche, pouvant se déplier pendant toute la course en translation de l'axe mobile et accompagnant le déplacement de cet axe et les trois parties de l'axe mobile étant équipées d'un même système de verrouillage à baïonnette que pour les corps des éléments, et les systèmes à baïonnettes sont alignés entre eux par l'immobilisation par paires et en rotation des trois parties de l'axe mobile par rapport aux corps des éléments afin que l'assemblage des parties de l'axe mobile soit réalisé conjointement avec l'assemblage des trois corps des éléments du raccord par les mêmes mouvements d'assemblage, et que la sécurité du déverrouillage de la pince soit assurée.

Selon une réalisation particulière, la longueur de l'élément entretoise est sensiblement égale à la longueur de la pièce faisant partie du raccord de pince et qui verrouille les pieds du raccord étanche sur ce raccord de pince.

Dans une variante de réalisation préférée, cette pièce de verrouillage est constituée par une bague montée coulissante sur le corps du raccord de pince et l'élément entretoise est constitué par un cavalier logé dans une rainure pratiquée dans le corps du raccord de pince.

L'invention sera maintenant décrite plus en détail en référence aux figures annexées, qui représentent seulement un mode d'exécution.

– la figure 1 est une vue schématique en coupe partielle représentant une cellule étanche à l'intérieur de laquelle pénètre le bras d'un manipulateur permettant de manipuler à distance des produits dangereux tels que des produits radioactifs,

– la figure 2 est une vue d'un raccord étanche pour télémanipulateur conforme à l'invention, montrant l'intérieur du mécanisme,

– la figure 3 est une vue schématique d'un raccord associé à une pince,

– la figure 4 est une vue d'un raccord étanche pour télémanipulateur conforme à l'invention, associé à une pince de télémanipulateur, l'ensemble étant monté sur un ratelier de déverrouillage,

– la figure 5 est une vue d'un raccord de pince et d'un raccord étanche montés sur un ratelier de déverrouillage, la partie comportant le raccord de pince et la pince de télémanipulateur ayant été déconnectées.

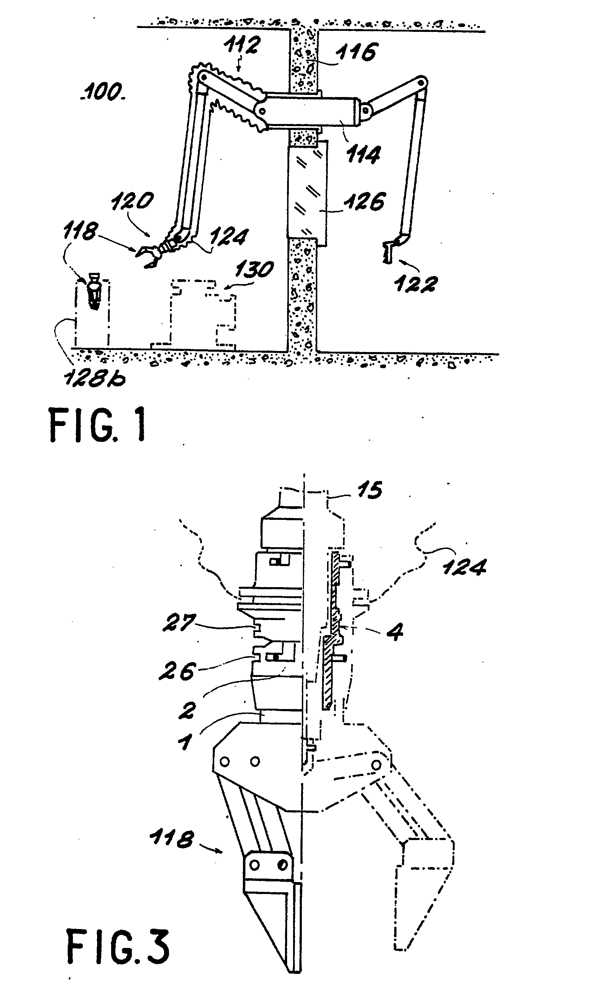

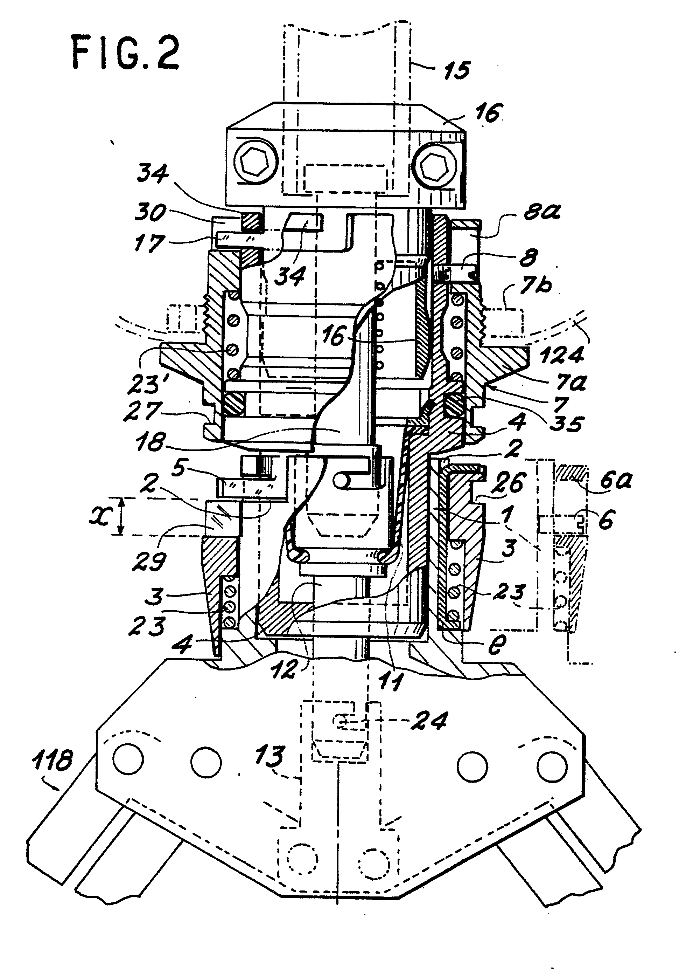

On a représenté sur la figure 1 une cellule étanche 100 dont une cloison 116 est traversée par un bras articulé 114 d'un manipulateur 112. L'extrémité du bras 114 qui est disposée à l'intérieur de la cellule 100 porte une pince 118 par l'intermédiaire d'un raccord de télémanipulateur 120. Un dispositif de commande 122 est monté à l'autre extrémité du bras située à l'extérieur de la cellule 100 pour commander à distance les différents mouvements du bras 114 et de la pince 118. Le dispositif de commande 122 permet en particulier de commander la rotation du raccord de télémanipulateur 120 et de la pince 118 autour de leur axe afin d'orienter cette dernière de façon convenable, et l'ouverture et la fermeture de la pince 118 au moyen d'un système de traction constitué par un câble comme on le décrira en référence aux figures 2 à 5. Le raccord de télémanipulateur 120 comprend un raccord étanche qui sera décrit plus en détail en référence à la figure 2 sur lequel vient se fixer une extrémité d'un soufflet d'étanchéité 124. L'autre extrémité du soufflet est fixée à la paroi 116 de la cellule. En outre, une fenêtre 126 est prévue dans la paroi 116 afin de permettre un contrôle visuel de la manipulation effectuée.

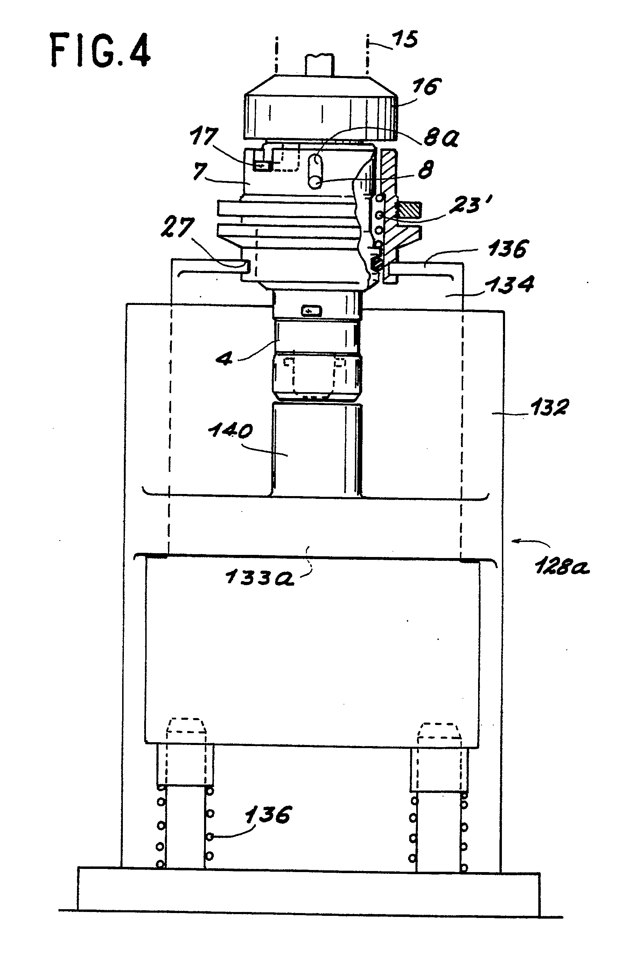

La cellule 100 contient un ratelier 128b sur lequel sont disposées une ou plusieurs pinces de rechange, par exemple de formes et/ou de dimensions différentes. Un second ratelier 128a prévu pour recevoir le raccord étanche du raccord de télémanipulateur (non représenté) sera décrit en détail en référence à la figure 4. En outre, la cellule 100 contient un objet sur lequel on désire effectuer des opérations à l'aide du télémanipulateur. Cet objet, désigné par la référence 130, a été représenté en traits mixtes.

On a représenté sur la figure 2 une vue partiellement en coupe d'un raccord de télémanipulateur conforme à l'invention. Ce raccord se compose de trois parties distinctes : le raccord de pince, le raccord étanche, le raccord du télémanipulateur.

A) Raccord de pince

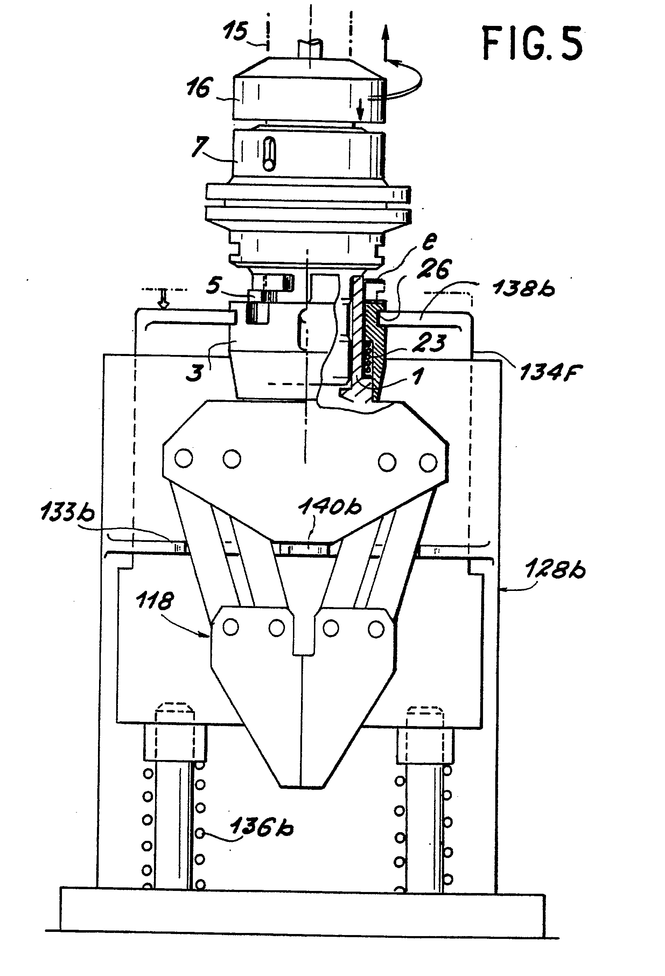

Ce raccord se monte directement sur la pince 118, ou bien, comme dans le mode de réalisation représenté, il est formé d'une seule pièce avec celle-ci. Il se compose d'un corps 1 comportant deux baïonnettes de verrouillage 2, ainsi qu'un pied 6 du système de sécurité de déverrouillage. Ce pied est situé dans un plan décalé angulairement par rapport au plan des baïonnettes. Il a été représenté en traits mixtes sur une vue annexe à la droite de la figure 2. Une bague coulissante 3 peut être déplacée entre une première position verrouillée dans laquelle la baïonnette 2 est bloquée en rotation, (position représentée à la droite de la figure 2), et une deuxième position déverrouillée, représentée à la gauche de la figure 2, dans laquelle la baïonnette 2 est libre en rotation. Le déplacement de la bague 3 entre ces deux positions est limité par la lumière oblongue 6a et le pied 6. La commande à distance du mouvement de translation de la bague 3 par rapport au corps 1 sera expliquée ultérieurement en référence aux figures 4 et 5.

B) Raccord étanche

Ce raccord étanche se compose d'un corps 4 comportant une partie de centrage permettant son montage à l'intérieur du raccord de pince. Une bague éclipsable 7 est montée coulissante sur le corps 4. Un joint d'étanchéité 35 est prévu entre le corps 4 et la bague 7. A la partie supérieure du corps 4, en considérant la figure 2, est un pied de centrage 8 qui coulisse dans une lumière oblongue 8a prévue longitudinalement dans la bague éclipsable 7. Ce pied 8 a pour fonction de limiter le mouvement de translation de la bague et, en même temps, de l'arrêter en rotation par rapport au corps 4.

Dans un plan décalé angulairement par rapport au plan du pied 8, on trouve deux baïonnettes 34 diamétralement opposées. La bague éclipsable 7 comporte encore une encoche 30 diamétralement opposée à la lumière 8a et qui a pour fonction de verrouiller en rotation les pieds 17 du raccord de pince lorsque ceux-ci sont engagés dans la baïonnette 34. Des moyens élastiques de rappel, constitués dans l'exemple représenté par un ressort hélicoïdal 23' intercalé entre le corps 4 et la bague éclipsable 7 sollicitent cette dernière en position de verrouillage. Une collerette extérieure 7a permet de serrer un manchon d'étanchéité 124 au moyen d'un écrou 7b vissé sur un filetage pratiqué sur le diamètre extérieur de la bague éclipsable. Le manchon d'étanchéité 124, encore appelé "booting", permet d'assurer l'étanchéité entre la cellule 100 et l'atmosphère extérieure à cette cellule dans laquelle se trouve l'opérateur. Sa fonction est donc essentielle. La commande à distance du mouvement de translation de la bague éclipsable 7 sera expliquée ultérieurement en référence aux figures 4 et 5.

Le corps 4 comporte encore un axe de transmission 12 comportant des pieds 24 qui permettent d'assurer la liaison avec une baïonnette de l'axe de commande de pince 13. Il assure la liaison entre cet axe et l'axe de commande du raccord de télémanipulateur. L'accouplement de l'axe 12 avec l'axe du raccord de pince s'effectue par un système à baïonnette. De manière identique, l'accouplement de l'axe de commande du raccord de pince avec l'axe 12 s'effectue par une baïonnette de forme et de dimensions identiques. Une membrane 11 est fixée sur l'axe 12. Cette membrane se déplie pendant le mouvement de translation de l'axe.

C) Raccord du télémanipulateur

Ce raccord se monte directement sur l'embout du système différentiel du télémanipulateur. Il se compose de deux éléments essentiels: un corps 16 permettant son assemblage avec l'embout 15 du télémanipulateur (représenté en traits mixtes) et, d'autre part, son accouplement avec le raccord étanche. Il comporte les deux pieds 17, mentionnés précédemment, pour le verrouillage des deux baïonnettes prévues dans le corps 4. D'autre part, le raccord de télémanipulateur comprend un axe 18 de transmission qui permet d'assurer la liaison entre l'axe de commande du raccord étanche (axe 12) et l'attache (chaîne ou câble) du télémanipulateur.

Lesdits premier 1, 3, second 4, 7, 11 et troisième éléments 15, 16 sont traversés de bout en bout par un axe mobile 12, 13, 18 en translation pour commander l'ouverture et la fermeture de la pince, cet axe étant composé des trois parties 12, 13 et 18, chaque partie de l'axe mobile étant reliée avec l'un des trois éléments proprement dits, l'ouverture du raccord étanche étant fermée par une membrane d'étanchéité 11 qui est reliée avec la partie 12 de l'axe mobile du raccord étanche, pouvant se déplier pendant toute la course en translation de l'axe mobile et accompagnant le déplacement de cet axe, et les trois parties 12, 13 et 18 de l'axe mobile étant équipées d'un même système de verrouillage à baïonnettes que pour les corps 14, 16 des éléments, et les systèmes à baïonnettes sont alignés entre eux par l'immobilisation par paires et en rotation des trois parties de l'axe mobile par rapport aux corps 1, 4, 16 des éléments afin que l'assemblage des parties de l'axe mobile soit réalisé conjointement avec l'assemblage des trois corps 1, 4 et 16 des éléments du raccord par les mêmes mouvements d'assemblage, et que la sécurité du déverrouillage de la pince soit assurée.

On a représenté sur la figure 3 une vue d'ensemble à plus petite échelle, de l'ensemble du raccord associé à une pièce 118. Cette figure permet d'apprécier en particulier le verrouillage par les baïonnettes 2 et 34 ainsi que les méplats 26 et 27 qui permettent la mise en place du raccord de pince et du raccord étanche respectivement, sur les appareils de montage et de démontage qui seront décrits ultérieurement. On a représenté également le booting 124 en traits mixtes.

La connexion et la déconnexion du raccord étanche sur le raccord de pince ainsi que la connexion et la déconnexion du raccord de télémanipulateur sur le raccord étanche s'effectuent de manière simple par une rotation et une translation, comme expliqué en référence au brevet européen n° 0 015 185.

Plus précisément, le raccord étanche et le raccord de pince sont montés chacun sur un appareil de montage et de démontage spécialement adapté, encore appelé "ratelier". Ces appareils se trouvent à l'intérieur de la cellule 100. On a représenté sur la figure 4 le ratelier 128a qui permet la connexion et la déconnexion du raccord de télémanipulateur 16 sur le raccord étanche. Sur la figure 5, la référence 128b désigne le ratelier qui permet le montage et le démontage du raccord étanche sur le raccord de pince.

Afin de ne pas surcharger les figures 4 et 5, on n'a représenté ni l'embout du télémanipulateur ni le manchon étanche 124 normalement fixé sur le raccord étanche 7. Le ratelier 128a (figure 3) se compose d'un bâti fixe 132 lourd qui repose dans la cellule. Une partie 134 est montée coulissante sur le bâti 132. Elle est repoussée vers le haut par les moyens élastiques 136 constitués par deux ressorts hélicoïdaux. Elle comporte une plaque support 138 qui comprend un évidement destiné à recevoir les méplats 27 de la bague éclipsable 7 (voir figure 2). Lorsque la bague 7 est reçue dans ce logement, elle est immobilisée en rotation. En revanche, elle peut se déplacer verticalement en translation par rapport au bâti 132 en même temps que le support 134. Ce dernier comporte une surface de butée 140 située au milieu de la traverse 133a et sur laquelle la partie extrême du corps 4 vient reposer lorsque la bague éclipsable est insérée dans le logement de la plaque support 138.

La connexion du raccord de télémanipulateur 16 sur le raccord étanche se fait en introduisant tout d'abord la partie terminale du corps dans l'alésage de guidage du corps 4 et en l'orientant de telle manière que les deux pieds diamétralement opposés 17 se présentent en regard de l'entrée de chacune des deux baïonnettes 34 prévues dans le corps 4. On pousse alors sur l'embout 15 au moyen du bras du télémanipulateur de manière à solliciter le corps du raccord 16 à pénétrer plus avant à l'intérieur du corps 4 du raccord étanche. Ce corps 4 étant en appui sur la surface de butée 140, il ne peut se déplacer selon la direction axiale du raccord. En revanche, la bague éclipsable 7, montée sur la partie coulissante 134, se déplace axialement par rapport au corps 4 sous l'action des deux pieds 17 qui font saillie radialement vers l'extérieur, comme on peut le voir sur la figure 2, de manière à prendre appui sur la bague éclipsable 7. Ce mouvement de translation du raccord 16 est suivi d'une translation de manière à engager les pieds 17 dans la partie circonférentielle des rainures des baïonnettes 34. Lorsque les pieds 17 arrivent à l'extrémité des rainures des baïonnettes, ils tombent en regard de chacune des deux encoches 30 diamétralement opposées prévues dans la bague 7 qui peut alors se déplacer vers le haut, en considérant les figures 2 à 4 aussi bien sous l'action du ressort hélicoïdal de rappel 23' que des deux ressorts 136 qui rappellent la partie coulissante 134. Dans cette position, les deux pieds 17 sont verrouillés en rotation par l'encoche 30 de la bague éclipsable 7. Ils ne peuvent donc plus s'échapper de la baïonnette 34. On obtient donc un verrouillage de l'embout 16 sur le raccord étanche 7.

La déconnexion du raccord 16 s'obtient en exerçant une traction vers le haut sur le raccord 16 dans la direction axiale de ce raccord. La bague éclipsable 7 est retenue par la plaque de support 138. Elle ne peut donc se déplacer axialement. Le ressort hélicoïdal 23' est alors comprimé. Le corps du raccord 16 et le corps 4 du raccord 7 se déplacent axialement par rapport à la bague éclipsable 7 jusqu'à ce que les deux pieds 17 sortent de l'encoche 30. A cette position, le raccord 16 devient à nouveau libre de tourner en rotation par rapport au corps 4. On peut donc faire effectuer à l'embout 16 un mouvement de rotation à l'aide du bras de télémanipulateur, de manière à dégager les pieds 17 de la baïonnette 34, ce qui libère le raccord de télémanipulateur. La déconnexion des raccords 16 et 7 est ainsi effectuée.

Le ratelier 128b représenté sur la figure 5 se compose, de manière similaire au ratelier 128a représenté sur la figure 4, d'un bâti fixe 132b lesté qui repose dans la cellule. Une partie 134b est montée coulissante sur le bâti 132. Cette partie coulissante comporte une plaque de support 138b qui comporte un évidement destiné à recevoir les deux méplats diamétralement opposés 26, (voir figure 2) de la bague coulissante 3. Lorsque la bague 3 est reçue dans ce logement, elle y est immobilisée en rotation. En revanche, elle peut se déplacer verticalement en translation par rapport au bâti 132b en même temps que le support coulissant 134. Ce dernier comporte une surface de butée 140b formée sur une traverse 133b sur laquelle une partie de la pince de télémanipulateur vient reposer lorsque la bague éclipsable est insérée par glissement dans le logement de la plaque support 138b. Sur la figure 5, la partie coulissante 134b a été représentée en trait continu en position basse et en traits mixtes en position haute.

La connexion du raccord étanche sur le raccord de pince s'effectue de la même manière que la connexion du raccord de télémanipulateur sur le raccord étanche. En d'autres termes, on introduit tout d'abord la partie terminale du corps 4 à l'intérieur de l'alésage de guidage du corps 1 du raccord de pince, et on présente les deux pieds de baïonnettes 5 prévus sur le corps 4 en regard des encoches des baïonnettes 2 prévues dans le corps 1 du raccord de pince. On enfonce les deux pieds 5 dans la partie longitudinale de la fente des baïonnettes à l'encontre de la résistance des moyens élastiques de rappel 23 disposés entre la bague coulissante 3 et le corps du raccord de pince, ainsi que des moyens élastiques 136b qui sollicitent la partie coulissante 134b vers le haut. La pince du télémanipulateur étant bloquée ent ranslation par la surface de butée 140b, la bague coulissante 3 se déplace vers le bas en même temps que la partie coulissante 134b jusqu'à ce que les deux pieds 5 parviennent au fond de la partie rectiligne, orientée parallèlement à la direction axiale du raccord, des deux baïonnettes 2. A ce moment, on effectue un mouvement de rotation de manière à engager les pieds 5 dans la partie circonférentielle de la baïonnette jusqu'à ce que l'un des pieds 5 tombe en regard de l'encoche 29 (voir figure 2) prévue sur la bague coulissante 3. Cette dernière est alors rappelée vers le haut sous l'action des moyens élastiques de rappel mentionnés précédemment et elle verrouille en rotation les deux pieds 5 et par conséquent le corps 4 du raccord étanche dont ils font partie.

La déconnexion du raccord étanche s'effectue de manière identique à la déconnexion du raccord de télémanipulateur décrite précédemment. En d'autres termes, on effectue d'abord une traction sur le corps 4, par l'intermédiaire du bras de télémanipulateur, de manière à dégager le pied 5 engagé dans l'encoche 29 de façon à pouvoir effectuer ensuite un mouvement de rotation qui permet de dégager les deux pieds 5 de la baïonnette 2.

Cependant, il peut se produire, au cours d'une manipulation, que la collerette 7a de la bague éclipsable 7 se coïnce. Dans ce cas, l'opérateur cherchera à la décoïncer en effectuant une traction à l'aide du bras de manipulateur. Si la collerette est fortement coïncée, elle ne se dégagera pas, mais il se produira un déplacement axial relatif du corps 4 par rapport à la bague éclipsable 7 à l'encontre des moyens élastiques 23'. Conformément à l'invention, ce déplacement axial de la bague éclipsable 7 sera limité par la présence d'un élément de butée. Dans le mode de réalisation représenté, cette butée est constituée par l'élément entretoise $e$. Cet élément entretoise est un cavalier logé dans une rainure $r$ prévue dans le corps du raccord de pince. A l'une de ses extrémités, l'élément entretoise $e$ est en butée contre le corps du raccord de pince. Son autre extrémité est repliée et vient se loger dans une encoche prévue dans la bague coulissante 3, lorsque cette bague est repoussée par le ressort hélicoïdal de rappel 23, dans la position de verrouillage, comme représenté sur la partie droite de la figure 2. La longueur de l'élément entretoise $e$ est prévue de telle manière que le pied 5 engagé dans l'encoche de verrouillage 29 de la bague 3 ne puisse s'en dégager. En d'autres termes, la bague coulissante 3 ne doit pas pouvoir se déplacer axialement d'une distance supérieure à la profondeur $x$ de l'encoche 29. Dans l'exemple de réalisation représenté, la longueur de l'élément formant entretoise $e$ est sensiblement égale à celle de la bague coulissante 3. Naturellement, il va de soi qu'il ne s'agit là que d'un exemple de réalisation et la longueur de l'élément entretoise dépend bien entendu de la position de son extrémité en butée contre un épaulement du corps du raccord de pince et de la longueur de la partie libre de la bague coulissante 3.

On comprend qu'en l'absence de l'élément entretoise $e$, la bague éclipsable 7 pourrait repousser la bague coulissante 3 jusqu'à ce que le pied 5 se dégage de l'encoche de verrouillage 29 dans laquelle il se trouve, ce qui provoquerait une déconnexion du raccord étanche de manière identique à ce qui a été décrit précédemment. En d'autres termes, les moyens de verrouillage de sécurité de l'invention permettent que le raccord étanche soit déconnecté du raccord de pince seulement lorsqu'on agit directement sur la bague coulissante 3 et non pas lorsqu'on exerce indirectement une action sur cette bague par l'intermédiaire de la bague éclipsable 7. Etant donné que le diamètre de la bague coulissante 3 est inférieur à celui de la bague éclipsable 7, il est peu probable qu'elle se coïnce. Par conséquent, un déverrouillage accidentel est ainsi quasiment impossible.

## Revendications

1. Raccord étanche pour télémanipulateur destiné notamment à la manipulation à distance de produits radioactifs ou dangereux, comprenant un premier élément (1, 3) appelé ci-après "raccord de pince" et comportant la pince, un second élément (4, 7, 11) appelé ci-après "raccord étanche" et un troisième élément (15, 16) appelé ci-après "raccord du télémanipulateur", le raccord étanche étant emboîté coaxialement dans le raccord de pince et le raccord du télémanipulateur étant emboîté coaxialement dans le raccord étanche, et d'autre part, relié à un bras porteur articulé, la jonction entre les corps (1, 4, 16) des trois éléments proprement dits et entre les trois parties de l'axe mobile étant réalisée par un système de verrouillage à baïonnette qui permet d'effectuer la connexion ou la déconnexion à distance du raccord de pince et du raccord du télémanipulateur au raccord étanche, le système de verrouillage à baïonnette entre les corps (1, 4, 16) des trois éléments permettant ce verrouillage par poussée axiale de l'élément (4, 7, 11, 12) à verrouiller à savoir le raccord étanche ou le raccord du télémanipulateur (15, 16) contre l'élément de réception à savoir le raccord de pince (1, 3) ou le raccord étanche (4, 7, 11), puis par rotation de l'élément à verrouiller autour de son axe, des pieds (5, 17) ménagés radialement sur les corps (4, 16) des éléments à verrouiller venant alors s'engager dans des baïonnettes (2, 34) de l'élément de réception et étant automatiquement verrouillés dans celles-ci au moyen d'une pièce faisant partie (3, 7) de l'élément de réception, caractérisé en ce qu'il comporte un élément d'arrêt ou de butée (e), qui interdit à une bague de verrouillage (7) du raccord étanche de coulisser jusqu'à la position de déverrouillage du verrouillage du raccord étanche sur le raccord de pince lorsque ce raccord de pince est monté sur le raccord étanche.

2. Raccord selon la revendication 1, caractérisé en ce que l'élément d'arrêt ou de butée est constitué par un élément formant entretoise (e) disposé entre le corps du raccord de pince et la bague coulissante (3) de verrouillage de ce raccord, la longueur de l'élément formant entretoise (e) étant telle que la bague coulissante de raccord de pince ne peut être déplacée axialement dans la direction des doigts de la pince (118).

3. Raccord selon la revendication 1 ou 2, caractérisé en ce que lesdits premier (1, 3), second (4, 7, 11) et troisième éléments (15, 16) sont traversés de bout en bout par un axe mobile (12, 13, 18) en translation pour commander l'ouverture et la fermeture de la pince, cet axe étant composé des trois parties (12, 13 et 18), chaque partie de l'axe mobile étant reliée avec l'un des trois éléments proprement dits, l'ouverture du raccord étanche étant fermée par une membrane d'étanchéité (11) qui est reliée avec la partie (12) de l'axe mobile du raccord étanche, pouvant se déplier pendant toute la course en translation de l'axe mobile et accompagnant le déplacement de cet axe, et les trois parties (12, 13 et 18) de l'axe mobile étant équipées d'un même système de verrouillage à baïonnette que pour les corps (14, 16) des éléments, et les systèmes à baïonnette sont alignés entre eux par l'immobilisation par paire et en rotation des trois parties de l'axe mobile par rapport aux corps (1, 4, 16) des éléments afin que l'assemblage des parties de l'axe mobile soit réalisé conjointement avec l'assemblage des trois corps (1, 4 et 16) des éléments du raccord par les mêmes mouvements d'assemblage, et que la sécurité du déverrouillage de la pince soit assurée.

4. Raccord selon l'une quelconque des revendications 1 à 3, caractérisé en ce que la longueur de l'élément entretoise est sensiblement égale à la longueur de la bague (23).

5. Raccord selon l'une quelconque des revendications 2 à 4, caractérisé en ce que l'élément entretoise (e) est constitué par un cavalier logé dans une rainure (r) pratiquée dans le corps (1) du raccord de pince.

## Patentansprüche

1. Dichte Verbindung für eine Handhabungsvorrichtung, die insbesondere für die Fernhandhabung von radioaktiven oder gefährlichen Produkten bestimmt ist, enthaltend ein erstes Element (1, 3), das nachfolgend "Greiferverbindung" genannt wird und den Greifer enthält, ein zweites Element (4, 7, 11), das nachfolgend "Dichtungsverbindung" genannt wird, und ein drittes Element (15, 16), das nachfolgend "Telemanipulatorverbindung" genannt wird, wobei die Dichtungsverbindung koaxial in der Greiferverbindung untergebracht ist und die Telemanipulatorverbindung koaxial in der Dichtungsverbindung untergebracht ist, und andererseits mit einem gelenkigen Tragarm verbunden ist, wobei die Verbindung zwischen den Körpern (1, 4, 6) der drei genannten Elemente und zwischen den drei Abschnitten beweglicher Achse durch ein Bajonettverriegelungssystem realisiert ist, das die Verbindung oder das Lösen der Greiferverbindung und der Telemanipulatorverbindung an und von der Dichtungsverbindung aus Distanz erlaubt, wobei das Bajonettverriegelungssystem zwischen den Körpern (1, 4, 16) der drei Elemente diese Verriegelung durch axiale Verschiebung des zu verriegelnden Elements (4, 7, 11, 12) erlaubt, nämlich der Dichtungsverbindung oder der Telemanipulatorverbindung (15, 16) gegenüber dem Aufnahmeelement, nämlich der Greiferverbindung (1, 3) oder der Dichtungsverbindung (4, 7, 11) und anschließend durch Drehung des zu verriegelnden Elements um seine Achse, wobei an den Körpern (4, 16) der zu verriegelnden Elemente radial ausgebildete Füße (5, 17) in Eingriff in Bajonette (2, 34) des Aufnahmeelements gelangen und in diesen mittels eines Teils automatisch verriegelt werden, das Bestandteil (3, 7) des Aufnahmeelements ist, dadurch gekennzeichnet, daß sie ein Arretierungs- oder Anschlagelement (e) aufweist, das eine Verriegelungsstange (7) der Dichtungsverbindung dagegen sperrt, bis in die Entriegelungsstellung der Verriegelung der Dichtungsverbindung auf der Greiferverbindung zu gleiten, wenn diese Greiferverbindung auf der Dichtungsverbindung montiert ist.

2. Verbindung nach Anspruch 1, dadurch gekennzeichnet, daß das Arretierungs- oder Anschlagelement von einem Verankerungselement (e) gebildet ist, das zwischen dem Körper der Greiferverbindung und der gleitenden Verriegelungsstange (3) dieser Verbindung angeordnet ist, wobei die Länge dieses Verankerungselements (e) derart ist, daß die gleitende Stange der Greiferverbindung axial nicht in Richtung der Finger des Greifers (118) verschoben werden kann.

3. Verbindung nach Anspruch 1 oder 2, dadurch gekennzeichnet, daß die genannten ersten (1, 3), zweiten (4, 7, 11) und dritten Elemente (15, 16) von Anfang bis Ende von einer beweglichen Achse (12, 13, 18) zum Steuern des Öffnens und des Schließens des Greifers längs durchdrungen sind, wobei diese Achse aus drei Teilen (12, 13 und 18) besteht, wobei jedes Teil der beweglichen Achse mit einem der drei genannten Elemente verbunden ist, die Öffnung der Dichtungsverbindung durch eine Dichtungsmembran (11) verschlossen ist, die mit dem Teil (12) der beweglichen Achse der Dichtungsverbindung verbunden ist, sich während der gesamten Verschiebebewegung der beweglichen Achse entfalten kann und die Verschiebung dieser Achse begleitet, und daß die drei Teile (12, 13 und 18) der beweglichen Achse mit einem gleichen Bajonettverriegelungssystem versehen sind, wie die Körper (14, 16) der Elemente, und daß die Bajonettsysteme untereinander durch paarweise Festlegung und in Drehung der drei Teile der beweglichen Achse gegenüber den Körpern (1, 4 und 16) der Elemente ausgerichtet sind, damit der Zusammenbau der Teile der beweglichen Achse zusammen mit dem Zusammenbau der drei Körper (1, 4 und 16) der Verbindungselemente durch dieselben Zusammenbaubewegungen ausgeführt wird und die Sicherheit der Entriegelung des Greifers sichergestellt ist.

4. Verbindung nach einem der Ansprüche 1 bis 3, dadurch gekennzeichnet, daß die Länge des Verankerungselements im wesentlichen gleich der Länge der Stange (23) ist.

5. Verbindung nach einem der Ansprüche 2 bis 4, dadurch gekennzeichnet, daß das Verankerungselement (e) von einer Klammer gebildet wird, die in einer Rille (r) angeordnet ist, die im Körper (1) der Greiferverbindung ausgebildet ist.

## Claims

1. Leaktight connector for a remote manipulator intended in particular for the remote manipulation of radioactive or dangerous products, comprising a first member (1, 3) hereinafter referred to as a "gripper connector" and comprising the gripper, a second member (4, 7, 11) hereinafter referred to as a "leaktight connector", and a third member (15, 16) hereinafter referred to as a "remote manipulator connector", the leaktight connector being coaxially nested in the gripper connector, and the remote manipulator connector being coaxially nested in the leaktight connector, and in addition connected to an articulated carrier arm, the junction between the bodies (1, 4, 16) of the three members proper and between the three parts of the movable shaft being made by a bayonet locking system which makes it possible to effect the remote connection or disconnection of the gripper connector and of the remote manipulator connector to or from the leaktight connector, the bayonet locking system between the bodies (1, 4, 16) of the three members permitting this locking by an axial thrust on the member (4, 7, 11, 12) which is to be locked, namely the leaktight connector or the remote manipulator connector (15, 16) against the receiver member, namely the gripper connector (1, 3) or the leaktight connector (4, 7, 11), then by rotation of the member to be locked about its axis, whereupon feet (5, 17) disposed radially on the bodies (4, 16) of the members to be locked are engaged in bayonet joints (2, 34) of the receiver member and are automatically locked therein by means of a component part (3, 7) of the receiver member, characterized in that it is provided with an arresting or stop member (e) which prevents a locking ring (7) of the leaktight connector from sliding to the position releasing the locking of the leaktight connector on the gripper connector when said gripper connector is mounted on the leaktight connector.

2. Leaktight connector according to Claim 1, characterized in that the arresting or stop member is composed of a member forming a spacer (e) disposed between the body of the gripper connector and the locking sliding ring (3) of said connector, the length of the member forming the spacer (e) being such that the sliding ring of the gripper connector cannot be displaced axially in the direction of the fingers of the gripper (118).

3. Connector according to Claim 1 or 2, characterized in that a shaft (12, 13, 18) capable of translatory movement to control the opening and closing of the gripper passes from end to end through said first member (1, 3), said second member (4, 7, 11) and said third member (15, 16), said shaft being composed of three parts (12, 13 and 18) and each part of the movable shaft being connected to one of the three members proper, the opening of the leaktight connector being closed by a sealing diaphragm (11) which is connected to the part (12) of the movable shaft of the leaktight connector and is adapted to unfold throughout the translatory movement of the movable shaft and accompanies the displacement of the latter, while the three parts (12, 13 and 18) of the movable shaft are equipped with the same bayonet locking system as for the bodies (14, 16) of the members and the bayonet systems are aligned with one another by locking in pairs, in respect of rotation, the three parts of the movable shaft in relation to the bodies (1, 4, 16) of the members in order that the assembly of the parts of the movable shaft may be effected conjointly with the assembly of the three bodies (1, 4 and 16) of the connector members by the same assembly movements and that security against the unlocking of the gripper may be achieved.

4. Connector according to any one of Claims 1 to 3, characterized in that the length of the spacer member is substantially equal to the length of the ring (23).

5. Connector according to any one of Claims 2 to 4, characterized in that the spacer member (e) is composed of a staple received in a slot (r) formed in the body (1) of the gripper connector.

FIG. 1

FIG.3

FIG.2

FIG.4

FIG.5